Europäisches Patentamt

**European Patent Office**

**Office européen des brevets**

(11) Numéro de publication : **0 165 858**
**B1**

(12) **FASCICULE DE BREVET EUROPÉEN**

(45) Date de publication du fascicule du brevet :
**17.08.88**

(51) Int. Cl.⁴ : **B 60 T 8/24**

(21) Numéro de dépôt : **85401118.6**

(22) Date de dépôt : **06.06.85**

(54) **Installation de freinage pour véhicule automobile, comportant un élément sensible à l'accélération transversale.**

(30) Priorité : **07.06.84 FR 8408961**
**10.10.84 FR 8415565**

(43) Date de publication de la demande :
**27.12.85 Bulletin 85/52**

(45) Mention de la délivrance du brevet :
**17.08.88 Bulletin 88/33**

(84) Etats contractants désignés :
**DE GB IT**

(56) Documents cités :
**CH-A- 341 078**
**DE-A- 1 630 405**
**DE-A- 3 207 728**
**DE-B- 1 160 744**
**FR-A- 2 519 921**
**FR-E- 94 565**
**JP-A-57 144 158**
**US-A- 3 784 773**
**US-A- 4 131 326**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Jeanguenin, Pierre**
**8 rue Mattern**
**F-25200 Montbeliard (FR)**
Inventeur : **Gentilhomme, Philippe**
**Feule**
**F-25190 Saint Hippolyte (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne les installations de freinage pour véhicules automobiles.

On a pu constater que lorsqu'un véhicule se déplace en courbe et qu'il est soumis à un freinage, il peut se produire un décrochement brusque du train arrière pouvant entraîner un risque de « tonneau » ou, en d'autres termes, de basculement et de retournement du véhicule.

On connaît un certain nombre d'installations visant à éliminer cet inconvénient en réalisant une diminution du freinage de la roue arrière disposée à l'intérieur de la courbe.

En particulier, le brevet DE-A-1 160 744 décrit une installation visant à obtenir ce résultat au moyen d'un dispositif à pistons, commandé, par l'intermédiaire d'un mécanisme à leviers, à partir d'un pendule soumis aux forces de décélération et d'accélération transversales ou centrifuges du véhicule, ce dispositif réalisant simultanément la répartition de l'effort de freinage entre les roues avant et les roues arrière ainsi qu'une répartition entre les deux roues arrière.

Un tel dispositif est de construction complexe et peu fiable et peut donc difficilement être mis en œuvre sur un véhicule.

Le document DE-A-1 630 405 décrit un agencement dans lequel il est prévu sur chacune des canalisations d'alimentation des freins des roues arrière, une électro-vanne reliée à un générateur de signaux sensible à l'accélération transversale du véhicule, de sorte qu'à partir d'une certaine valeur de seuil de cette accélération, l'une ou l'autre de ces électro-vannes est actionnée pour fermer la canalisation correspondante et supprimer ainsi l'effort de freinage sur la roue disposée à l'intérieur de la courbe. Il est prévu par ailleurs dans cet agencement une capacité avec laquelle le cylindre de frein de chaque roue arrière est mis en communication, lors de la fermeture de l'électro-vanne associée, afin de faire chuter la pression dans le cylindre de frein à une valeur déterminée.

Ce dispositif, s'il vise à obtenir le résultat indiqué ci-dessus, est également de construction complexe puisqu'il est nécessaire de prévoir sur chaque canalisation une électro-vanne, ainsi qu'un dispositif électrique de détection et de commande, ce qui non seulement complique l'installation mais pose également des problèmes d'interface avec le circuit hydraulique de freinage.

Tout en cherchant à éliminer ce même inconvénient, l'agencement décrit dans la demande FR-A-82 22 001 (N° de publication : FR-A-2 519 921) prévoit également sur chacune des canalisations associées aux freins des roues arrière, un dispositif obturateur sensible à la décélération, ainsi qu'à l'accélération transversale du véhicule, afin de réaliser simultanément une modulation de l'effort de freinage, en fonction de ces deux paramètres. Un tel dispositif demeure néanmoins relativement compliqué à mettre en œuvre et la présence de deux dispositifs distincts complique l'installation et peut poser des problèmes d'implantation et de fiabilité.

Enfin, le document JP-A-57-144 158 décrit une installation de freinage pour véhicule automobile, comprenant une source de fluide sous pression, un circuit d'alimentation des freins des roues avant et un circuit d'alimentation des freins arrière, alimentés à partir de ladite source, ainsi que des moyens pour diminuer l'effort de freinage exercé par le frein de la roue arrière disposée à l'intérieur de la courbe, lorsque le véhicule se déplace le long d'une telle courbe. Lesdits moyens comprennent un raccord sous la forme d'un corps à 4 voies, dont deux sont reliées à la source de fluide sous pression tandis que les deux autres sont reliées aux freins. Ce raccord comporte de plus deux obturateurs coopérant respectivement avec deux sièges associés aux deux voies reliées aux freins des roues arrière, ces deux obturateurs étant commandés par un organe mobile disposé dans la partie centrale du corps et qui se déplace en fonction des accélérations transversales subies par le véhicule. Un tel agencement est cependant relativement compliqué, puisqu'il nécessite la présence de deux obturateurs, et de deux entrées de fluide sous pression disposées à deux extrémités opposées du corps.

Le but de cette invention est en conséquence de réaliser une installation de freinage pour véhicule qui permette, notamment, lors d'un freinage en courbe, de diminuer ou de supprimer l'effort de freinage exercé sur la roue située à l'intérieur de la courbe, ce dispositif devant toutefois être de construction particulièrement simple et d'un fonctionnement très fiable.

A cet effet, l'invention a pour objet une installation de freinage pour véhicule automobile, comprenant une source de fluide sous pression, un circuit d'alimentation des freins des roues avant et un circuit d'alimentation des freins de roues arrière, alimentés à partir de ladite source, et des moyens pour diminuer l'effort de freinage exercé par le frein de la roue arrière disposée à l'intérieur de la courbe, lorsque le véhicule se déplace le long d'une telle courbe, caractérisée en ce que lesdits moyens comprennent un raccord sous la forme d'un corps à trois voies dont l'une est reliée à la source de fluide sous pression, tandis que les deux autres, disposées transversalement par rapport à l'axe longitudinal du véhicule, sont reliées aux freins des roues arrière, ce corps délimitant un logement dans lequel est reçu un obturateur mobile, sensible aux accélérations transversales subies par le véhicule, cet obturateur pouvant coopérer avec deux sièges associés respectivement aux deux voies reliées aux freins des roues arrière, pour obturer au moins en partie l'une ou l'autre de ces voies sous l'effet d'accélérations transversales suffisantes, la liaison entre le raccord et les freins des roues arrière étant croisée.

Suivant des modes particuliers de réalisation de cette invention

— le raccord est disposé au voisinage du train arrière du véhicule ;

— selon une variante, le raccord comprend un corps complété à ses deux extrémités par des bouchons sur lesquels sont raccordées les canalisations reliées aux freins des roues arrière et qui délimitent lesdits sièges, le corps comportant sur sa paroi interne des moyens de guidage latéral de l'obturateur.

Selon une autre variante, le logement comprend deux rampes inclinées symétriquement vers son plan de symétrie parallèle à l'axe longitudinal du véhicule, en formant un V ouvert suivant un angle obtus, au fond duquel une bille formant l'obturateur mobile se loge au repos et est rappelée par les rampes en l'absence d'accélérations transversales du véhicule, les deux sièges coopérant avec cette dernière étant ménagés à l'extrémité interne de ces rampes et inclinés symétriquement en direction dudit plan de symétrie.

— l'inclinaison des sièges en direction du plan de symétrie est au moins égale à celle des rampes.

— une face ouverte du corps, voisine du châssis du véhicule, débouche dans le logement et est fermée par un couvercle, ce logement symétrique comprenant de chaque côté dudit plan de symétrie, une cavité cylindrique dans laquelle débouche la voie de fluide correspondante reliée à un frein de roue arrière et qui s'épanouit, suivant un même axe en direction dudit plan, en un tronc de cône dont la petite base par son intersection avec la cavité cylindrique, délimite le siège correspondant de la bille, la grande base du tronc de cône étant tangente au plan de symétrie au fond du logement et se prolongeant coaxialement jusqu'audit plan, de part et d'autre du point de tangence par des parties de cylindre, les génératrices des troncs de cônes en ce point de tangence, formant le V ouvert suivant un angle obtus.

— les parties de cylindre situées de part et d'autre du point de tangence dans la direction du plan de symétrie forment des premiers moyens de guidage de la bille vers le plan contenant les axes des sièges.

— les parois des troncs de cônes situées de part et d'autre des rampes dans la direction du plan de symétrie forment des deuxièmes moyens de guidage de la bille pour la rappeler vers le plan contenant les axes des sièges.

L'invention sera mieux comprise à la lecture de la description de deux modes de réalisation donnés uniquement à titre d'exemple et faite en référence aux dessins annexés, sur lesquels :

— la Fig. 1 est un schéma de l'installation suivant l'invention ;

— la Fig. 2 est une vue en coupe à plus grande échelle d'un premier mode de réalisation d'un élément essentiel de cette installation ;

— la Fig. 3 est une vue en coupe partielle à plus grande échelle d'un deuxième mode de réalisation de cet élément essentiel de l'installation de la Fig. 1, prise transversalement à l'axe longitudinal du véhicule ;

— la Fig. 4 est une vue en coupe analogue à celle de la Fig. 3, à plus grande échelle, avant sertissage du couvercle et sans bille d'obturation, cette vue correspondant à une coupe suivant la ligne 3-3 de la Fig. 5 ;

— la Fig. 5 est une vue en plan par-dessus suivant la Fig. 4, montrant l'intérieur du logement ; et

— la Fig. 6 est une vue en coupe prise suivant la ligne 5-5 de la Fig. 5.

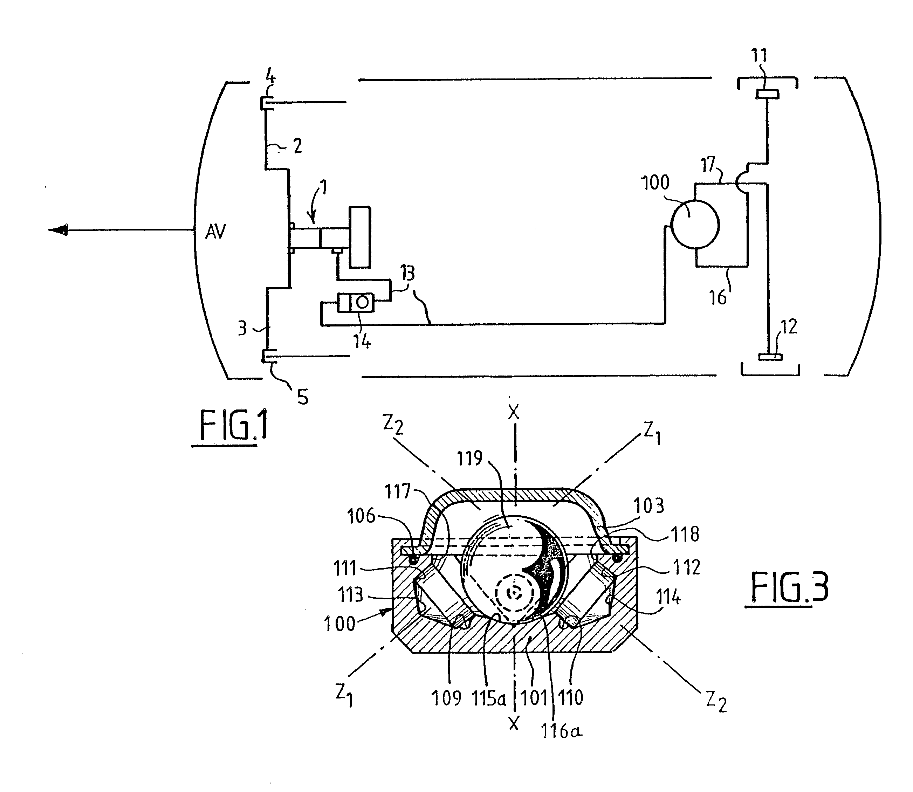

L'installation représentée schématiquement à la Fig. 1 comprend une source de fluide sous pression constituée par exemple par un maître-cylindre 1 et qui peut être de tout type connu. Ce maître-cylindre est relié par deux canalisations 2 et 3 aux freins 4 et 5 des roues avant du véhicule, qui sur le dessin sont représentés sous la forme de freins à disques.

Il est également relié à un circuit d'alimentation des freins 11 et 12 des roues arrière, qui, sur le dessin sont représentés comme étant constitués par des freins à tambour.

Le circuit d'alimentation des freins des roues arrière comprend une canalisation 13 sur laquelle est placé un dispositif compensateur ou limiteur 14, connu en soi, qui peut par exemple être asservi à la charge et/ou à la décélération longitudinale du véhicule. Cette canalisation alimente ensuite par l'intermédiaire d'un raccord 100 à trois voies et de deux canalisations 16, 17 les freins arrière respectifs.

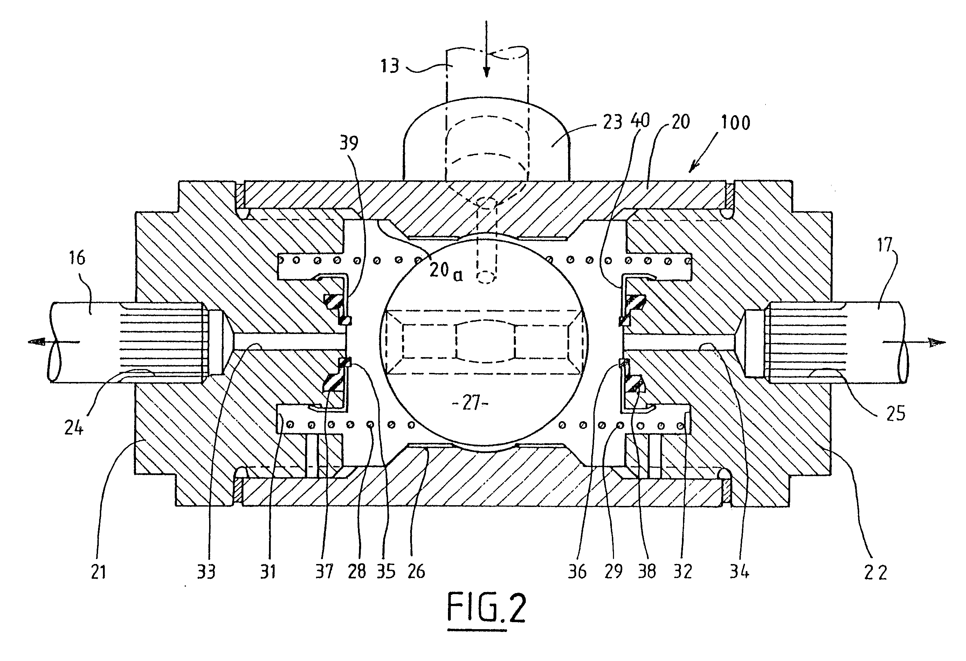

Suivant un premier mode de réalisation de l'invention, le raccord en T représenté plus en détail à la Fig. 2 comprend un corps 20 tubulaire de forme générale cylindrique ou parallélépipédique d'axe transversal par rapport à la direction longitudinale du véhicule, délimitant un logement 20a fermé à ses deux extrémités opposées par deux bouchons 21 et 22. Dans sa partie médiane, ce corps comporte une première voie 23 à laquelle est raccordée la canalisation 13, tandis que chacun des deux bouchons comporte une voie 24, 25 sur laquelle se raccordent les canalisations 16, 17. On notera (Fig. 1) que la liaison entre le raccord 100 et les freins est croisée, une voie disposée d'un côté du raccord étant reliée au frein de la roue située de l'autre côté. Le long de sa paroi interne et dans sa partie médiane, le corps 20 comporte, dans le mode de réalisation représenté, quatre saillies 26 dirigées vers son axe et qui sont destinées à assurer le centrage et le guidage latéral d'un obturateur constitué par une bille 27. Cette bille est par ailleurs sollicitée par deux ressorts 28, 29 prenant respectivement appui dans deux gorges 31, 32 des bouchons 21 et 22.

Ces derniers délimitent sur leurs faces dirigées vers l'intérieur du corps, et autour de passages axiaux 33 et 34, un siège 35, 36 constitué dans l'exemple représenté par une bague 37, 38 en matériau élastomère, dont une partie fait saillie à l'intérieur du logement 20a délimité par le corps et qui est maintenue en place au moyen d'une attache métallique 39, 40 venant en prise sur un épaulement du bouchon.

Le fonctionnement de l'installation suivant l'invention est le suivant : lorsque le véhicule se déplace en courbe, et qu'il est soumis à un freinage, l'accélération centrifuge ou transversale qu'il subit peut être suffisante pour provoquer un déplacement de la bille 27 vers l'extérieur du virage ou de la courbe. A partir d'un certain seuil d'une telle accélération, la bille vient s'appliquer contre le siège correspondant, obturant ainsi la voie reliée à la canalisation d'alimentation du frein de la roue disposée à l'intérieur de la courbe. A titre d'exemple, le poids de la bille et la flexibilité des ressorts 28, 29 qui la sollicitent peuvent être choisis de telle façon que la coupure de l'alimentation du frein de la roue intérieure soit obtenue par une accélération centrifuge de l'ordre de $2m/s^2$, pour un véhicule très sensible au défaut de stabilité.

Il résulte de ce qui précède que le dispositif suivant l'invention permet de résoudre de façon particulièrement efficace le problème posé. En effet, on obtient la répartition souhaitée du freinage entre les roues arrière et les moyens mis en jeu sont particulièrement simples puisqu'il suffit de remplacer le raccord en T habituel par un raccord suivant l'invention auquel est incorporé un obturateur permettant de couper ou de diminuer l'alimentation du frein de la roue disposée à l'intérieur de la courbe.

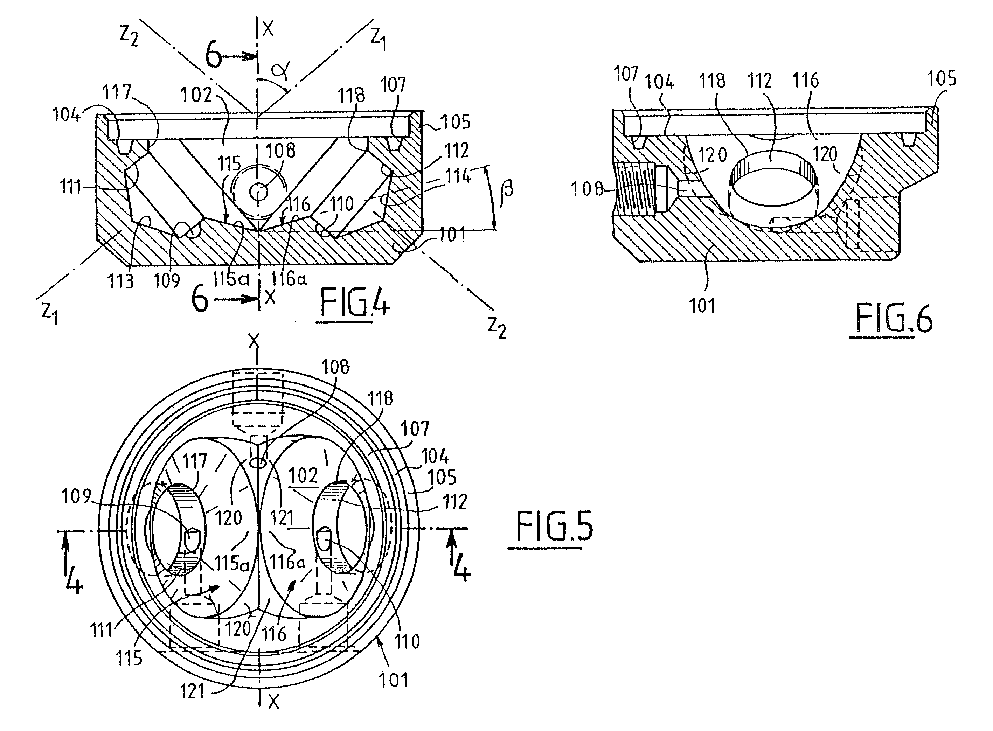

Suivant un deuxième mode de réalisation de l'invention, le raccord 100 représenté aux Fig. 3 à 5 comprend un corps 101 sensiblement cylindrique, à l'intérieur duquel est ménagé un logement 102.

Ce logement 102 débouche sur une face ouverte du corps 101, voisine du châssis du véhicule, et à peu près parallèle à ce dernier, fermée par un couvercle 103 qui s'adapte sur une portée annulaire 104 prévue autour de l'ouverture du logement 102.

Le couvercle 103 est serti sur le corps 101 (Fig. 3) par rabattement d'un épaulement 105 annulaire radialement extérieur à la portée 104, un joint torique 106 étant introduit dans une gorge 107 circulaire formée sur la portée 104 afin d'assurer l'étanchéité du logement 102.

Comme le montrent les Fig. 3 à 5, le logement 102 est symétrique par rapport à un plan X-X parallèle à l'axe longitudinal du véhicule.

Une première voie 108 d'admission du fluide, raccordée à la canalisation 13, débouche dans le logement 102, l'axe de cette voie 108 étant contenu dans le plan X-X. Par ailleurs, de chaque côté du plan de symétrie X-X, une voie 109, 110, raccordée à la canalisation 16, 17 correspondante, débouche dans une cavité 111, 112 cylindrique, perpendiculairement aux directions radiale et axiale de cette dernière et dans une région opposée à la face ouverte du corps 101.

De manière analogue au mode de réalisation précédent, la liaison entre le raccord 100 et les freins est croisée de telle façon qu'une voie disposée d'un côté du raccord soit reliée au frein de la roue située de l'autre côté.

La cavité 111, 112 cylindrique se prolonge par un cône 113, 114, formant le fond de la cavité. En outre, l'axe $Z_1$-$Z_1$, $Z_2$-$Z_2$ de la cavité 111, 112 est incliné suivant un angle $\alpha$, par exemple de 40°, par rapport au plan symétrie X-X, de telle façon que les axes $Z_1$-$Z_1$ et $Z_2$-$Z_2$ se coupent en un point situé au-dessus du fond du logement 102.

A l'opposé du cône 113, 114, la cavité 111, 112 s'épanouit en un tronc de cône 115, 116 de même axe $Z_1$-$Z_1$, $Z_2$-$Z_2$, évasé en direction dudit plan X-X et dont la grande base est tangente à ce dernier au fond du logement 102, l'angle $\beta$ formé par la paroi latérale du tronc de cône 115, 116, avec la normale au plan X-X étant par exemple de 17°.

Si l'angle $\alpha$ peut varier sensiblement autour de la valeur de 40°, donnée plus haut à titre indicatif, l'expérience montre que pour un fonctionnement optimum de l'installation de freinage suivant l'invention, la latitude de variation de l'angle $\beta$ est restreinte à 30 minutes autour de la valeur 17° précitée.

L'intersection de la petite base du tronc de cône 115, 116 avec la cavité 111, 112, cylindrique délimite un siège 117, 118 circulaire pour une bille 119, formant un obturateur mobile, reçue dans le logement 102. L'arête formée par cette intersection peut être cassée selon un angle tel que la bille porte sensiblement au milieu de la portée ainsi formée.

Conformément à l'invention, les génératrices axiales des troncs de cônes 115 et 116 qui s'étendent au fond du logement 102 dans le prolongement du point de tangence, entre le plan de symétrie X-X et le siège 117, 118 correspondant, forment un V ouvert suivant un angle obtus en direction du couvercle 103 dont les branches forment des rampes 115a et 116a qui ont chacune une inclinaison, en direction du plan de symétrie X-X inférieure à celle du siège 117, 118 ménagé à l'extrémité externe de la rampe correspondante. Au repos, la bille 119 (Fig. 2) repose par gravité au fond dudit V.

Enfin, de chaque côté du plan de symétrie X-X, la grande base du tronc de cône 115, 116 se prolonge jusqu'audit plan X-X par deux parties de cylindre 120, 121, en saillie vers la face ouverte du corps 101 et formées, dans la direction du plan de symétrie X-X, de part et d'autre de la zone de tangence dudit tronc de cône 115, 116 avec le plan X-X, le diamètre de ces parties de cylindre 120, 121 correspondant à celui de la grande base du tronc de cône 117, 118 adjacent.

Par ailleurs, ces parties de cylindre 120 et 121 forment des premiers moyens de guidage de la bille 119 vers un plan transversal au plan de symétrie X-X contenant les axes $Z_1$-$Z_1$, $Z_2$-$Z_2$ des sièges 117, 118. De même, les parois des troncs de cône 115 et 116 situées de part et d'autre des rampes 115a et 116a dans la direction du plan de symétrie X-X forment des deuxièmes moyens de guidage de la bille 119 pour la rappeler vers ledit plan transversal au plan de symétrie X-X contenant les axes $Z_1$-$Z_1$, $Z_2$-$Z_2$ des sièges 117, 118.

On remarquera que les dimensions du couvercle 103 de la bille 119 et des différentes parties du logement 102 sont telles que le diamètre correspondant aux parties de cylindre 120, 121 soit sensiblement supérieur à celui de la bille 119, que le diamètre de la cavité 111, 112 et de la partie basse du tronc de cône 117, 118 soit sensiblement inférieur à celui de cette bille et que la distance séparant l'extrémité externe ou supérieure des rampes 115a, 116a du couvercle 103 soit sensiblement supérieure au diamètre de la bille 119.

Sur le plan de la réalisation pratique, le logement est avantageusement ménagé dans le corps 101 par des perçages appropriés de chaque côté du plan de symétrie X-X.

Le fonctionnement de l'installation de freinage suivant la présente invention est le suivant : lorsque le véhicule se déplace en courbe et qu'il est soumis à un freinage, l'accélération centrifuge ou transversale qu'il subit peut être suffisante pour provoquer un déplacement de la bille vers l'extérieur du virage ou de la courbe.

A partir d'un certain seuil d'une telle accélération, la bille 119, qui au repos est reçue par gravité entre les branches du V formant les rampes 115a, 116a, monte en roulant le long de la rampe située à l'extérieur de la courbe pour venir s'appliquer contre le siège 117, 118 adjacent à cette rampe, dans une position d'équilibre induite par la force résultant de l'accélération transversale, obturant ainsi la voie 109, 110 reliée à la canalisation d'alimentation du frein de la roue arrière disposée à l'intérieur de la courbe. En l'absence d'accélérations transversales, la bille 119 est rappelée, par gravité, au fond du V par la rampe 115a, 116a adjacente au siège obturé.

Quand la bille 119 repose au fond du logement 102, les parties de cylindre 120 et 121 en saillie vers la face ouverte du corps 101, formant les premiers moyens de guidage, maintiennent la bille 119 dans le plan contenant les axes $Z_1$-$Z_1$, $Z_2$-$Z_2$ des sièges 117, 118 à l'encontre d'une accélération longitudinale du véhicule. De même, quand la bille 119 gravit la rampe 120 ou 121 sous l'influence d'une accélération transversale au véhicule les parois des troncs de cône 115 ou 116 situées de part et d'autre de la rampe 115a ou 116a dans la direction du plan de symétrie X-X et formant les deuxièmes moyens de guidage, rappellent, par gravité, la bille 119 dans le plan contenant les axes $Z_1$-$Z_1$, $Z_2$-$Z_2$ des sièges 117, 118.

Ce deuxième mode de réalisation du raccord de l'installation de freinage suivant l'invention, résoud particulièrement efficacement le problème posé pour la répartition du freinage entre les roues arrière quand le véhicule freine dans une courbe, tout en utilisant un raccord d'un fonctionnement sûr de par sa simplicité de construction qui ne fait appel à aucun ressort. En effet, ce dernier ne comprend essentiellement qu'un corps muni d'un logement spécialement conformé et une bille, ce qui, en outre, rend son coût de fabrication bon marché.

Bien entendu, les séquences de fonctionnement qui ont été décrites ci-dessus pour ces deux modes de réalisation, interviennent indépendamment de la compensation habituelle réalisée par le compensateur 14, au moyen de laquelle le freinage des deux roues arrière peut être diminué.

Il est clair que la symétrie du logement telle que définie ci-dessus optimise l'efficacité du raccord. Toutefois un logement à peu près symétrique est bien entendu compris dans les caractéristiques de l'invention.

## Revendications

1. Installation de freinage pour véhicule automobile, comprenant une source (1) de fluide sous pression, un circuit (2, 3) d'alimentation des freins (4, 5) des roues avant et un circuit (13, 14, 15, 16, 17) d'alimentation des freins (11, 12) des roues arrière, alimentés à partir de ladite source, et des moyens (100) pour diminuer l'effort de freinage exercé par le frein de la roue arrière disposée à l'intérieur de la courbe, lorsque le véhicule se déplace le long d'une telle courbe, caractérisée en ce que lesdits moyens comprennent un raccord (100) sous la forme d'un corps (20 ; 101) à trois voies dont l'une (23 ; 108) est reliée à la source de fluide sous pression, tandis que les deux autres (24, 25 ; 109, 110) disposées transversalement par rapport à l'axe longitudinal du véhicule, sont reliées aux freins (11, 12) des roues arrière, ce corps délimitant un logement (20a ; 102) dans lequel est reçu un obturateur mobile (27 ; 119), sensible aux accélérations transversales subies par le véhicule, cet obturateur pouvant coopérer avec deux sièges (35, 36 ; 117, 118) associés respectivement aux deux voies (24, 25) reliées aux freins des roues arrière, pour obturer l'une ou l'autre de ces voies sous l'effet d'accélérations transversales suffisantes, la liaison entre le raccord (100) et les freins (11, 12) des roues arrière étant croisée.

2. Installation suivant la revendication 1, caractérisée en ce que le raccord (100) est disposé au voisinage du train arrière du véhicule.

3. Installation suivant la revendication 1, caractérisée en ce que le raccord (100) comprend un corps (20) complété à ses deux extrémités par des bouchons (21, 22) sur lesquels sont raccordées les canalisations (16, 17) reliées aux freins des roues arrière et qui délimitent lesdits sièges (35, 36), le corps (20) comportant sur sa paroi interne des moyens (26) de guidage latéral de l'obturateur (27).

4. Installation suivant la revendication 3, caractérisée en ce que les sièges (35, 36) sont délimités par des bagues (37, 38) en élastomère fixées sur les bouchons.

5. Installation suivant l'une des revendications 1 et 2, caractérisée en ce que le logement (102) comprend deux rampes (115a, 116a) inclinées symétriquement vers son plan de symétrie (X-X) parallèle à l'axe longitudinal du véhicule en formant un V ouvert suivant un angle obtus, au fond duquel une bille (119) formant l'obturateur mobile se loge au repos et est rappelée par les rampes en l'absence d'accélérations transversales du véhicule, les deux sièges (117, 118) coopérant avec cette dernière étant ménagés à l'extrémité externe de ces rampes et inclinés symétriquement en direction du plan de symétrie (X-X).

6. Installation suivant la revendication 5, caractérisée en ce que l'inclinaison des sièges (117, 118) en direction de plan de symétrie (X-X) est au moins égale à celle des rampes (115a, 116a).

7. Installation suivant l'une des revendications 5 et 6, caractérisée en ce qu'une face ouverte du corps (101) voisine du châssis du véhicule, débouche dans le logement (102) et est fermée par un couvercle (103), ce logement (102) symétrique comprenant de chaque côté dudit plan de symétrie, une cavité (111, 112) cylindrique dans laquelle débouche la voie (109, 110) de fluide correspondante reliée à un frein (11, 12) de roue arrière, qui s'épanouit, suivant un même axe $(Z_1-Z_1, Z_2-Z_2)$ en direction dudit plan, en un tronc de cône (115, 116) dont la petite base par son intersection avec la cavité cylindrique (111, 112) délimite le siège (117, 118) correspondant de la bille (119), la grande base du tronc de cône (115, 116) étant tangente au plan de symétrie (X-X) au fond du logement (102) et se prolongeant coaxialement jusqu'audit plan (X-X) de part et d'autre du point de tangence, par des parties de cylindre (120, 121), les génératrices des troncs de cône (115, 116) en ce point de tangence, formant le V ouvert suivant un angle obtus.

8. Installation suivant la revendication 7, caractérisée en ce que les parties de cylindre (120, 121) situées de part et d'autre du point de tangence dans la direction du plan de symétrie (X-X), forment des premiers moyens de guidage de la bille (119) vers le plan contenant les axes $(Z_1-Z_1, Z_2-Z_2)$ des sièges (117, 118).

9. Installation suivant la revendication 7, caractérisée en ce que les parois des troncs de cône (115, 116) situées de part et d'autre des rampes (115a, 116a) dans la direction du plan de symétrie (X-X) forment des deuxièmes moyens de guidage de la bille (119) pour la rappeler vers le plan contenant les axes $(Z_1-Z_1, Z_2-Z_2)$ des sièges (117, 118).

10. Installation suivant l'une quelconque des revendications 7 à 9, caractérisée en ce que les parties de cylindre (120, 121) ont un diamètre correspondant à celui de la grande base du tronc de cône (17, 118) adjacent.

11. Installation suivant l'une quelconque des revendications 7 à 10, caractérisée en ce que le couvercle (103) est serti sur le corps (101).

**Claims**

1. Motor vehicle brake installation, comprising a source (1) of fluid under pressure, a circuit (2, 3) for supplying the brakes (4, 5) of the front wheels and a circuit (13, 14, 15, 16, 17) for supplying the brakes (11, 12) of the back wheels, these circuits being supplied from the said source, and means (100) for reducing the brake force exerted by the brake of the back wheel which is located on the inside of the curve when the vehicle moves along such a curve, characterized in that the said means comprise a connection (100) in the form of a body (20 ; 101) having three channels, of which one (23 ; 108) is connected to the source of fluid under pressure, while the other two (24, 25 ; 109, 110), arranged transversely with respect to the longitudinal axis of the vehicle, are connected to the brakes (11, 12) of the back wheels, this body delimiting a receiver (20a ; 102) in which there is received a movable obstructor (27 ; 119) which is sensitive to the transverse accelerations of the vehicle, it being possible for this obstructor to cooperate with two seats (35, 36 ; 117, 118) associated respectively to the two channels (24, 25) connected to the brakes of the back wheels, to obstruct one or the other of these channels as a result of sufficient transverse accelerations, the link between the connection (100) and the brakes (11, 12) of the back wheels being crossed.

2. Installation according to Claim 1, characterized in that the connection (100) is arranged in the vicinity of the rear of the vehicle chassis.

3. Installation according to Claim 1, characterized in that the connection (100) comprises a body (20) finishing at its two ends in plugs (21, 22) to which there are attached the ducts (16, 17) connected to the brakes of the back wheels, and which delimit the said seats (35, 36), the body (20) having on its internal wall means (26) for guiding the obstructor (27) laterally.

4. Installation according to Claim 3, characterized in that the seats (35, 36) are delimited by elastomeric rings (37, 38) fastened to the plugs.

5. Installation according to one of Claims 1 and 2, characterized in that receiver (102) comprises two ramps (115a, 116a) inclined symmetrically towards its plane of symmetry (X-X) parallel to the longitudinal axis of the vehicle, these ramps forming an open V at an obtuse angle, at the base of which a ball (119) which forms the movable obstructor is located at rest and is brought back to this base by the ramps in the absence of transverse acceleration of the vehicle, the two seats (117, 118) cooperating with this ball being arranged at the outside end of these ramps and inclined symmetrically in the direction of the plane of symmetry (X-X).

6. Installation according to Claim 5, characterized in that the inclination of the seats (117, 118) in the direction of plane of symmetry (X-X) is at least equal to that of the ramps (115a, 116a).

7. Installation according to one of Claims 5 and 6, characterized in that an open face of the body (101) adjacent to the chassis of the vehicle opens out in the receiver (102) and is closed by a cover (103), this symmetrical receiver (102) comprising on each side of the said plane of symmetry a cylindrical cavity (111, 112) in which there opens out the corresponding fluid channel (109, 110) connected to one back wheel brake (11, 12), this channel widening out, along the same axis $(Z_1-Z_1, Z_2-Z_2)$ in the direction of the said plane, in a truncated cone (115, 116), of which the small base delimits by its intersection with the cylindrical cavity (111, 112) the corresponding seat (117, 118) of the ball (119), the large base of the truncated cone (115, 116) being at a tangent to the plane of symmetry (X-X) at the base of the receiver (102) and extending coaxially as far as the said plane (X-X) on either side of the tangent point in cylindrical parts (120, 121), the generators of the truncated cones (115, 116) at this target point forming the open V at an obtuse angle.

8. Installation according to Claim 7, characterized in that the cylindrical parts (120, 121) located on either side of the tangent point in the direction of the plane of symmetry (X-X) form first means for guiding the ball (119) towards the plane containing the axes ($Z_1$-$Z_1$, $Z_2$-$Z_2$) of the seats (117, 118).

9. Installation according to Claim 7, characterized in that the walls of the truncated cones (115, 116) located on either side of the ramps (115a, 116a) in the direction of the plane of symmetry (X-X) form second means for guiding the ball (119) to bring it back towards the plane containing the axes ($Z_1$-$Z_1$, $Z_2$-$Z_2$) of the seats (117, 118).

10. Installation according to any one of Claims 7 to 9, characterized in that the cylindrical parts (120, 121) have a diameter corresponding to that of the large base of the adjacent truncated cone (117, 118).

11. Installation according to any one of Claims 7 to 10, characterized in that the cover (103) is crimped onto the body (101).

**Patentansprüche**

1. Bremsanlage für Kraftfahrzeuge, mit einer Quelle (1) für ein unter Druck stehendes Fluid, einem Speisekreis (2, 3) für die Bremsen (4, 5) der Vorderräder und einem Speisekreis (13, 14, 15, 16, 17) für die Bremsen (11, 12) der Hinterräder, die aus dieser Quelle gespeist werden, und Mitteln (100) zur Verminderung der durch die Bremse des auf der Innenseite der Kurve angeordneten Hinterrads ausgeübten Bremskraft, wenn das Fahrzeug sich längs einer solchen Kurve bewegt, dadurch gekennzeichnet, daß die Mittel ein Verbindungsstück (100) in Form eines Körpers (20 ; 101) mit drei Wegen umfassen, von denen der eine (23 ; 108) mit der Quelle für Fluid unter Druck verbunden ist, während die beiden anderen (24, 25 ; 109, 110), die transversal in Bezug auf die Längsachse des Fahrzeugs angeordnet sind, mit den Bremsen (11, 12) der Hinterräder verbunden sind, wobei der Körper eine Aufnahme (20a ; 102) bestimmt, in welcher ein beweglicher Verschluß (27 ; 119) aufgenommen ist, welcher auf vom Fahrzeug erfahrene Querbeschleunigungen empfindlich ist, wobei dieser Verschluß mit zwei Sitzen (35, 36 ; 117, 118), die beziehentlich den beiden mit den Bremsen der Hinterräder verbundenen Wegen (24, 25) zugeordnet sind, für ein Verschließen des einen oder anderen dieser Wege unter ausreichenden Querbeschleunigungswirkungen zusammenwirken kann, wobei die Verbindung zwischen dem Verbindungsstück (100) und den Bremsen (11, 12) über Kreuz ist.

2. Anlage nach Anspruch 1, dadurch gekennzeichnet, daß das Verbindungsstück (100) im Bereich des Hinterachsaggregats des Fahrzeugs angeordnet ist.

3. Anlage nach Anspruch 1, dadurch gekennzeichnet, daß das Verbindungsstück (100) einen Körper (20) umfaßt, welcher an seinen beiden Enden mit Deckeln (21, 22) vervollständigt ist, an welchen die mit den Bremsen der Hinterräder verbundenen Rohrleitungen (16, 17) angeschlossen sind und welche die Sitze (35, 36) bestimmen, wobei der Körper (20) an seiner Innenwand Mittel (26) zur seitlichen Führung des Verschlusses (27) aufweist.

4. Anlage nach Anspruch 3, dadurch gekennzeichnet, daß die Sitze (35, 36) durch auf den Deckeln befestigte Ringe (37, 38) aus Elastomer bestimmt sind.

5. Anlage nach einem der Ansprüche 1 und 2, dadurch gekennzeichnet, daß die Aufnahme (102) zwei Rampen (115a, 116a) aufweist, die symmetrisch zu ihrer zur Längsachse des Fahrzeugs parallelen Symmetrieebene (X-X) in Form eines im stumpfen Winkel offenen V geneigt sind, auf dessen Boden sich eine den beweglichen Verschluß bildende Kugel (119) in Ruhe legt und bei Fehlen einer Querbeschleunigung des Fahrzeugs durch die Rampen zurückgeholt wird, wobei die beiden mit letzterer zusammenwirkenden Sitze (117, 118) im äußeren Ende der Rampen ausgebildet und symmetrisch in Richtung auf die Symmetrieebene (X-X) geneigt sind.

6. Anlage nach Anspruch 5, dadurch gekennzeichnet, daß die Neigung der Sitze (117, 118) in Richtung auf die Symmetrieebene (X-X) wenigstens gleich derjenigen der Rampen (115a, 116a) ist.

7. Anlage nach einem der Ansprüche 5 und 6, dadurch gekennzeichnet, daß eine dem Fahrzeugchassis benachbarte offene Seite des Körpers (101) in die Aufnahme (102) mündet und mit einer Abdeckung (103) verschlossen ist, wobei die symmetrische Aufnahme (102) auf jeder Seite der Symmetrieebene einen zylindrischen Hohlraum (111, 112) aufweist, in welchen der entsprechende mit einer Hinterradbremse (11, 12) verbundene Fluidweg (109, 110) mündet und welcher sich mit gleicher Achse ($Z_1$-$Z_1$, $Z_2$-$Z_2$) in Richtung auf die Ebene in einen Kegelstumpf (115, 116) erweitert, dessen kleine Basis durch ihren Schnitt mit dem zylindrischen Hohlraum (111, 112) den entsprechenden Sitz (117, 118) für die Kugel (119) bestimmt, wobei die große Basis des Kegelstumpfs (115, 116) die Symmetrieebene (X-X) am Boden der Aufnahme (102) berührt und sich koaxial beiderseits des Berührungspunktes bis zu der genannten Ebene (X-X) in Zylinderabschnitten (120, 121) fortsetzt, wobei die Erzeugenden der Kegelstümpfe (115, 116) in diesem Berührungspunkt das in einem stumpfen Winkel offene V bilden.

8. Anlage nach Anspruch 7, dadurch gekennzeichnet, daß die beiderseits des Berührungspunkts in der Richtung der Symmetrieebene (X-X) gelegenen Zylinderabschnitte (120, 121) erste Mittel zur Führung der Kugel (119) zur die Achsen ($Z_1$-$Z_1$, $Z_2$-$Z_2$) der Sitze (117, 118) enthaltenden Ebene bilden.

9. Anlage nach Anspruch 7, dadurch gekennzeichnet, daß die Wände der Kegelstümpfe (115, 116), die beiderseits der Rampen (115a, 116a) in der Richtung der Symmetrieebene (X-X) liegen, zweite Mittel zur Führung der Kugel (119) für ein Rückholen derselben zur die Achsen ($Z_1$-$Z_1$, $Z_2$-

$Z_2$) der Sitze (117, 118) enthaltenden Ebene bilden.

10. Anlage nach irgendeinem der Ansprüche 7 bis 9, dadurch gekennzeichnet, daß die Zylinderabschnitte (120, 121) einen Durchmesser haben, der demjenigen der großen Basis des benachbarten Kegelstumpfs (117, 118) entspricht.

11. Anlage nach irgendeinem der Ansprüche 7 bis 10, dadurch gekennzeichnet, daß die Abdeckung (103) auf den Körper (101) gefalzt ist.

FIG.1

FIG.3

FIG.2

0 165 858

FIG.4

FIG.6

FIG.5

0 165 858